(19) Europäisches Patentamt
European Patent Office
Office européen des brevets

(11) Veröffentlichungsnummer: **0 111 259**
**B1**

(12) # EUROPÄISCHE PATENTSCHRIFT

(45) Veröffentlichungstag der Patentschrift: **25.05.88**

(51) Int. Cl.$^4$: **C 07 C 125/06,** C 08 G 18/10, C 08 G 18/83, C 08 F 299/06, C 09 J 3/00, C 08 F 220/00

(21) Anmeldenummer: **83112073.8**

(22) Anmeldetag: **01.12.83**

(54) **Verfahren zur Herstellung von (Meth)acrylsäureestergruppierungen aufweisenden Verbindungen, neue (Meth)acrylsäureester sowie anaerob härtende Klebe- und Dichtmassen.**

(30) Priorität: **09.12.82 DE 3245563**

(43) Veröffentlichungstag der Anmeldung: **20.06.84 Patentblatt 84/25**

(45) Bekanntmachung des Hinweises auf die Patenterteilung: **25.05.88 Patentblatt 88/21**

(84) Benannte Vertragsstaaten: **AT BE CH DE FR GB IT LI NL SE**

(56) Entgegenhaltungen:
**EP-A-0 036 813**
**EP-A-0 044 352**
**WO-A-82/02048**

(73) Patentinhaber: **Henkel Kommanditgesellschaft auf Aktien**
**Postfach 1100 Henkelstrasse 67**
**D-4000 Düsseldorf-Holthausen (DE)**

(72) Erfinder: **Gruber, Werner, Dr.**
**Franz-Kremer-Strasse 7**
**D-4052 Korschenbroich (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

EP 0 111 259 B1

**Beschreibung**

Die vorliegende Erfindung betrifft neue anaerob härtende Klebe- und Dichtmassen auf Basis von neuen (Meth)acrylsäureestergruppierungen aufweisenden Urethanen sowie ein Verfahren zur Herstellung dieser Urethangruppen sowie endständige (Meth)acrylsäureestergruppen aufweisende Verbindungen.

Mehr als eine Acrylsäureester- bzw. (Meth)acrylsäureestergruppierung im Molekül enthaltende Verbindungen sind seit langem bekannt und werden insbesondere als unter anaeroben Bedingungen härtende Klebe- und Dichtmassen verwendet. Häufig werden für diese Zwecke wenigstens 2 (Meth)acrylsäureestergruppen im Molekül enthaltende Verbindungen eingesetzt. Durch Variation des Grundmoleküls können bestimmte gewünschte Eigenschaften dieser anaeroben Massen beeinflußt werden. Neben einer raschen Aushärtezeit, insbesondere einer relativ kurzen Zeit bis zum Erreichen einer Anfangsfestigkeit werden insbesondere hohe Festigkeiten bei Temperaturbelastung gewünscht.

Aus der deutschen Auslegeschrift 17 45 063 sind seit längerem Umsetzungsprodukte aus mehrfunktionellen aromatische wie aliphatsichen Isocyanaten und Hydroxyalkylmethacrylaten bekannt. Diese lassen sich mit den üblichen Hilfsstoffen zu anaerob härtenden Dichtungsmitteln bzw. Klebstoffen verarbeiten. Sie weisen im allgemeinen eine gute Flexibilität und auch Dehnbarkeit auf. Allerdings lassen die erzielbaren Festigkeitswerte, die bei Raumtemperatur oder leicht erhöhten Temperaturen noch befriedigend sind, bei stärkerer Temperaturbelastung erheblich zu wünschen übrig.

Aufgabe der vorliegenden Erfindung war es daher, neue (Meth)acrylsäureester zu finden, die sich mit den üblichen Hilfsstoffen weiterverarbeiten lassen zu hoch wärmefesten Klebstoffen und Dichtungsmitteln.

Gegenstand der Erfindung ist zunächst einmal die Herstellung von Urethangruppen sowie endständigen (Meth)acrylestergruppierungen aufweisenden Verbindungen, welche dadurch erfolgt, daß man mehr als eine Isocyanatgruppierung im Molekül enthaltende Verbindungen, deren Molekulargewicht 2 500 nicht überschreitet mit 2,3-Epoxypropanol-1 (Glycid) in solchem Verhältnis zur Reaktion bringt, daß anstelle aller Isocyanatgruppierungen Epoxygruppen treten und diese dann mit der äquivalenten Menge an (Meth)acrylsäure und/oder Acrylsäure zur Reaktion bringt.

Nach einer günstigen Ausführungsform können die Isocyanate ausgewählt sein aus einer ein Molekulargewicht von 700 nicht überschreitenden Gruppe von Verbindungen: Toluylendiisocyanat, dimerisiertem Toluylendiisocyanat, Diphenylmethandiisocyanat, Naphthylendiisocyanat, Hexamethylendiisocyanat, Isophorondiisocyanat, Trimethylhexamethylendiisocyanat, Triphenylmethandiisocyanat, Dianisidindiisocyanat, Tris-(4-isocyanatophenyl)-thiophosphat sowie dem Addukt von 3 mol Toluylendiisocyanat an Trimethylolpropan.

Nach einer anderen günstigen Ausführungsform können mehr als eine Isocyanatgruppierung im Molekül enthaltende Verbindungen eingesetzt werden, die Umsetzungsprodukte von terminale Hydroxylgruppen enthaltenden Polyestern eines Molgewichtes zwischen etwa 500 und 2 000 mit niedermolekularen Di- bzw. Triisocyanaten sind. Bei den endständige OH-Gruppen enthaltenden Polyestern handelt es sich um bekannte Verbindungen, die je nach Wunsch aus mehrfunktionellen Alkoholen wie Ethylenglykol, Diethylenglykol, Triethylenglykol, Trimethylolpropan, Butandiol, Hexandiol sowie mehrwertigen Säuren bzw. deren Anhydriden, zum Beispiel Maleinsäureanhydrid, Phthalsäureanhydrid oder auch Terephthalsäure bzw. Adipinsäure durch Veresterung gewonnen werden. Die OH-Zahlen derartiger Polyester sollen zwischen etwa 80 und 250 liegen. Diese OH-gruppenhaltigen Polyester werden dann in an sich bekannter Weise mit niedermolekularen Di- bzw. Triisocyanaten umgesetzt. Hier hat sich insbesondere aus Toluylendiisocyanat, insbesondere das handelsübliche Monomerengemisch sowie Diphenylmethandiisocyanat oder auch Naphthylendiisocyanat bewährt. Gegebenenfalls kann die Reaktion in Gegenwart von Lösungsmitteln durchgeführt werden und mit geeigneten Katalysatoren auf Basis von zinnorganischen Verbindungen oder mit tertiären Aminen beschleunigt werden.

Sowohl die in der ersten Gruppe genannten relativ niedermolekularen mehrfunktionellen Isocyanate als auch die in der zweiten Gruppe genannten werden dann in einer ersten Verfahrensstufe mit 2,3-Epoxypropanol-1 umgesetzt. Diese Verbindung wird im weiteren als Glycid bezeichnet. Die Reaktion des Glycids mit den Isocyanaten erfolgt zweckmäßig in wasserfreien organischen Lösungsmitteln wie Toluol, Xylol, Kohlenwasserstofen oder auch Estern, und zwar in Gegenwart geeigneter Katalysatoren wie tertiären Aminen oder quaternären Ammoniumbasen, die beispielsweise in Form von Ionenaustauschern eingesetzt werden können. Bei der Umsertzung soll das Verhältnis zwischen Glycid und Isocyanat so bemessen sein, daß eine OH-Gruppe des Glycids auf eine Isocyanatgruppierung entfällt.

Bei den so herstellbaren Verbindungen insbesondere dann, wenn man von der ersten Gruppe der Isocyanate ausgeht, handelt es sich häufig um kristallisierbare Verbindungen. Dies trifft insbesondere dann zu, wenn es sich bei dem Rest R in der nachfolgenden Reaktionsgleichung um einen alkylaromatischen Kohlenwasserstoffrest mit 7 bis 19 Kohlenstoffatomen handelt:

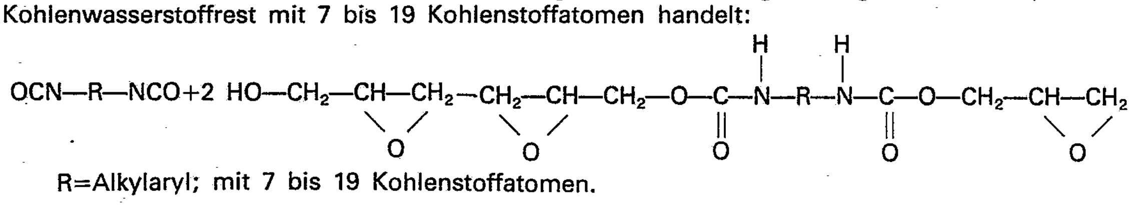

(I)

R=Alkylaryl; mit 7 bis 19 Kohlenstoffatomen.

Die so erhältlichen Verbindungen werden dann anschließend mit Acrylsäure bzw. bevorzugt Methacrylsäure umgesetzt. Diese Reaktion verläuft dann vereinfacht an einer Seite des Moleküls dargestellt gemäß Formel II

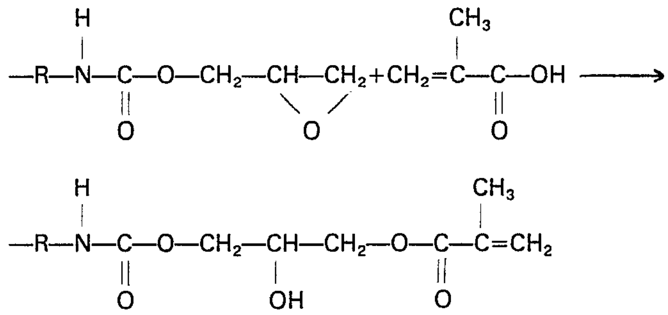

(II)

Hierbei soll also eine Epoxidgruppe auf eine Carboxylgruppe entfallen.

Gegenstand der Erfindung sind weiter neue (Meth)acrylsäureester der allgemeinen Formel

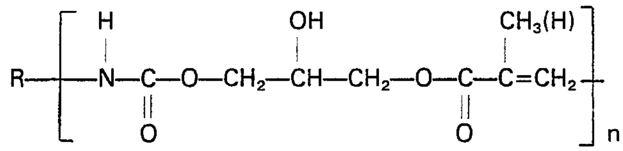

wobei R ein sich von einem organischen Di- oder Triisocyanat sich ableitender Rest ist und n 2 oder 3 ist.

Bevorzugt unter diesen neuen (Meth)acrylsäureestern sind insbesondere solche, in denen R einen alkylaromatischen Kohlenwasserstoffrest mit 7 bis 19 Kohlenstoffatomen darstellt.

Die neuen Urethanmethacrylsäureesterverbindungen unterscheiden sich von denen aus der DE—AS—17 45 063 durch den Gehalt einer sekundären Hydroxylgruppe, die über den Glycidylrest in das Molekül gekommen ist. Es muß als überraschend angesehen werden, daß dieser minimale Unterschied in der Struktur bei der Herstellung von anaerob erhärtenden Klebe- und Dichtmassen eine überraschend starke Verbesserung der Wärmefestigkeit der Verklebungen bzw. Dichtungen bewirkt.

Gegenstand der Erfindung sind demnach weiterhin anaerob erhärtende Klebe- und Dichtmassen, die als wesentlichen Bestandteil die vorstehend beschriebenen Verbindungen enthalten. Im allgemeinen liegen diese, bezogen auf andere copolymerisierbare Verbindungen in einer Menge von 20 bis 80 Gewichtsprozent, bezogen auf die insgesamt polymerisierbaren Verbindungen, vor.

Als weitere polymerisierbare Verbindungen in den anaeroben Massen können sowohl Monomethacrylsäureester als auch Bis-methacrylsäureester verwendet werden. Geeignete Ester leiten sich z.B. von folgenden Alkoholen ab: Tetrahydrofurfurylalkohol, Dimethyloltetrahydrofuran, Cyclohexanol, Ethylhexanol, Ethylenglykol bzw. Propylenglykol. Die Bis-methacrylsäureester des Ethylenglykols, des Tri-, Tetra- sowie Pentaethylenglykols und der Monomethacrylester des Ethylenglykols stellen bevorzugte Mischungspartner dar. Auch kann die Mitverwendung von freien polymerisierbaren Carbonsäuren wie Methacrylsäure oder Acrylsäure in untergeordneter Menge angezeigt sein.

Als Initiator für neuen Klebstoff- bzw. Dichtungsmassen dienen insbesondere Hydroperoxide wie Cumolhydroperoxid oder tert.-Butylhydroperoxid. Diese werden meist in einer Menge von 0,5 bis 5 Gewichtsprozent, bezogen auf die polymerisierbaren Anteile, eingesetzt. Zweckmäßig werden noch Stabilisatoren und Beschleuniger mitverwendet. Als Stabilisator eignet sich Chinon oder Hydrochinon in Konzentrationen von 100 bis 1 000 ppm, vorzugsweise 200 bis 500 ppm, bezogen auf polymerisierbare Anteile. Also Beschleuniger sind songenannte Imidbeschleuniger wie Benzoesäuresulfimid oder auch Sulfohydrazidbeschleuniger wie p-Toluolsulfonsäurehydrazid, vorzugsweise in Kombination mit einem tertiären Amin wie etwa dem N,N-Dimethyl-p-toluidin und als Stabilisator Peressigsäure geeignet. Beschleuniger und Stabilisatoren müssen in einem voneinander abgestimmten Verhältnis zugesetzt werden, um optimale Eigenschaften der Klebstoffe bzw. Dichtungsmittel zu erzielen. Im allgemeinen werden sie in Mengen von 0,1 bis 3 Gew.-%, bezogen auf die polymerisierbaren Anteile, eingesetzt.

Für bestimmte Anwendungszwecke können noch Zusätze an Verdickungsmitteln oder Farbstoffen erfolgen. Die Klebstoffe oder Dichtungsmassen werden durch einen Mischprozeß aller Komponenten bei Raumtemperatur hergestellt und sind in den meisten Fällen Jahre stabil, sofern sie in genügend luftdurchlässigen Gefäßen und kühl gelagert werden.

Die anaeroben Klebstoffe sind zum Verbinden von Metallen insbesondere dann geeignet, wenn hohe Festigkeiten bei höhren Temperaturen gefordert werden. Sie finden daher Anwendung zum Verkleben von Flächen bzw. Metallteilen aus den verschiedensten Materialien zur Befestigung von Lagerwellen zum Abdichten von Rohrverbindungen und dergleichen mehr, insbesondere dann, wenn Temperaturbelastungen zu erwarten sind.

Beispiel 1

a) Umsetzung von Toluoldiisocyanat mit Glycid

In einem Reaktionskolben wurden in 500 ml wasserfreiem Toluol 87 g (0,5 mol) Toluoldiisocyanat (handelsübliches Isomerengemisch) und 74 g (1 mol) Glycid gelöst und 5 h bei 60°C gerührt. Nach dem Abdestillieren des Lösungsmittels wurden 161 g des entsprechenden Glycidylurethans erhalten.

| | | | |
|---|---|---|---|
| Fp 75—78°C | | | |
| MG 322,32 | $C_{15}H_{18}N_2O_6$ | | |
| CHN-Analyse: | ber. C 55,90% | gef. C 55,42% | |
| | H 5,63% | H 5,75% | |
| | N 8,69% | N 8,90% | |
| Epoxid | ber. 9,94% | gef. 9,7% | |

b) Umsetzung des Glycidylurethans auf Basis Toluoldiisocyanat mit Methacrylsäure

121 g (0,376 mol) Glycidylurethan wurden in 300 ml Aceton gelöst und mit 61,9 g (0,72) Methacrylsäure in Gegenwart von 0,1% Hydrochinon und 0,3% Triethylamin bei 65°C umgesetzt. Nach 10 stündiger Reaktionszeit lag die Säurezahl <10, die Reaktion wurde abgebrochen. Das Lösungsmittel wurde abgezogen, es hinterblieben 176 g eines viskosen Öles. Der Epoxid-Gehalt lag bei 0,3, was einem Umsetzungsgrad von 96% entspricht.

Beispiel 2

a) Umsetzung von Diphenylmethandiisocyanat mit Glycid

In einem Reaktionskolben wurden in 500 ml wasserfreiem Toluol 125 g (0,5 mol) Diphenylmethandiisocyanat und 74 g (0,5 mol) Glycid zur Reaktion gebracht. Nach fünfständiger Reaktionszeit bei 50°C war kein Isocyanat mehr nachweisbar. Das Lösungsmittel wurde abgedampft, es hinterblieben 197 g farbloses Glycidylurethan.

| | | | |
|---|---|---|---|
| Fp. 121°C | | | |
| MG 398,42 | $C_{21}H_{22}N_2O_6$ | | |
| CHN-Analyse: | ber. C 63,31% | gef. C 63,55% | |
| | H 5,57% | H 5,70% | |
| | N 7,03% | N 6,80% | |
| Epoxid | ber. 8,04% | gef. 7,7% | |

b) Umsetzung des Glycidylurethans auf Basis Diphenylmethandiisocyanat mit Methacrylsäure

199 g (0,5 mol) Glycidylurethan wurden in 300 ml Aceton mit 86 g (1 mol) Methacrylsäure in Gegenwart von 1 000 ppm Hydrochinon und 0,3% Triethylamin bei 65°C umgesetzt. Nach 10 stündiger Reaktionszeit lag die Säurezahl <10. Das Lösungsmittel wurde abgezogen, es hinterblieben 280 g eines viskosen Öles. Der Epoxidgehalt lag bei 0,5, was einem Unsetzungsgrad von 92% entspricht.

Beispiel 3

a) Umsetzung eines Hydroxypolyesters mit Toluylendiisocyanat

134 g eines Prepolymeren aus einem Hydroxylgruppen enthaltenden Polyester (Basisbausteine: Ethylenglykol, Triethylenglykol, Maleinsäureanhydrid, Phthalsäureanhydrid, OH-Zahl 112) und Toluoldiisocyanat mit einem NCO-Gehalt von 2,4% wurden in 500 ml Toluol mit 29,6 g Glycid bei 60°C umgesetzt. Nach fünfstündiger Reaktionszeit war kein Isocyanat mehr nachweisbar. Das Lösungsmittel wurde abgedampft, zurück blieb ein zähviskoses Öl.

| | | |
|---|---|---|
| Epoxid-Gehalt: | ber. | 1,15% |
| | gef. | 1,0% |

b) Umsetzung des Glycidylurethans auf Basis eines Polyesters mit Methacrylsäure

165 g Glycidylurethan entsprechend Beispiel 3 wurden in 300 ml Essigester mit 35 g Methacrylsäure in Gegenwart von 1 000 ppm Hydrochinon und 0,3% Triethylamin bei 70°C umgesetzt. Nach 15stündiger Reaktionszeit lag die Säurezahl <10. Das Lösungsmittel wurde im Vakuum abgezogen, es hinterblieben 195 g eines viskosen Öles. Der Epoxid-Gehalt lag bei 0,2%, was einem Umsetzungsgrad von 83% entspricht.

Beispiel 4

Zur Herstellung von anaerob härtenden Klebstoffen wurde die folgende Rahmenrezeptur benutzt:

| | |
|---|---|
| 53,0% | Bis-methacrylsäureester entsprechend Beispiel 1—3 |
| 10,0% | Hydroxyethylmethacrylat |
| 30,0% | Bis-methacrylsäureester des Triethylenglykols |
| 3,0% | Methacrylsäure |
| 0,01% | Hydrochinon |
| 1,0% | p-Toluolsulfonsäurehydrazid |
| 1,0% | Cumolhydroperoxid, 70 %ig in Cumol |
| 1,0% | N,N-Dimethyl-p-toluidin |
| 1,0% | Peressigsäure |

Gemäß DIN 54452 erfolgte die Prüfung der Druckscherfestigkeit einmal nach 48stündiger Lagerung bei 20°C sowie nach einer zusätzlichen Temperung bei 180°C. Die zweite Messung wurde bei der genannten Temperatur von 180°C durchgeführt. In der folgenden Tabelle sind in Abhängigkeit vom Beispiel wiedergegeben die bei 48stündiger Lagerung und nach zusätzlicher Temperung gemessenen Werte.

TABELLE

| Bis-methacrylsäure-ester nach Beispiel | Druckscherfestigkeit nach 48 h 20°C | 48 h 20°C/3 h 180°C+) |
|---|---|---|
| 1b | 37 $N/mm^2$ | 30 $N/mm^2$ |
| 2b | 45 $N/mm^2$ | 35 $N/mm^2$ |
| 3b | 48 $N/mm^2$ | 24 $N/mm^2$ |

Vergleichsversuch

In die Rahmenrezeptur wurde eingesetzt der Bis-methacrylsäureester aus Tolouylendiisocyanat und Hydroxyethylmethacrylat nach DE—AS—17 45 063. Beispiel 1, und bei der Testung nach 48 h/20°C gefunden: 45 $N/mm^2$. Nach der Temperung bei 3 h/180°C war der Wert (Messung bei 180°C) abgefallen auf 15 $N/mm^2$.

**Patentansprüche**

1. Verfahren zur Herstellung von Urethangruppen sowie endständige (Meth)acrylestergruppierungen aufweisende Verbindungen, dadurch gekennzeichnet, daß man mehr als eine Isocyanatgruppierung im Molekül enthaltende Verbindung, deren Molekulargewicht 2 500 nicht überschreitet, mit 2,3-Epoxypropanol-1 (Glycid) in solchem Verhältnis zur Reaktion bringt, daß anstelle aller Isocyanatgruppierungen Epoxygruppen treten und diese dann mit der äquivalenten Menge an Methacrylsäure und/oder Acrylsäure zur Reaktion bringt.

2. Verfahren zur Herstellung von Verbindungen nach Anspruch 1, dadurch gekennzeichnet, daß man die mehr als eine Isocyanatgruppierung im Molekül enthaltenden Verbindungen aus einer ein Molekulargewicht von 700 nicht überschreitenden Gruppe auswählt: Toluylendiisocyanat, dimerisiertes Toluylendiisocyanat, Diphenylmethandiisocyanat, Naphthylendiisocyanat, Hexamethylendiisocyanat, Isophorondiisocyanat, Trimethylhexamethylendiisocyanat, Triphenylmethandiisocyanat, Dianisidindiisocyanat, Tris-(4-isocyanatophenyl)-thiophosphat sowie des Adduktes von 3 mol Toluylendiisocyanat an Trimethylpropan.

3. Verfahren zur Herstellung von Verbindungen nach Anspruch 1, dadurch gekennzeichnet, daß man die mehr als eine Isocyanatgruppierung im Molekül enthaltenden Verbindungen auswählt aus den Umsetzungsprodukten von terminalen Hydroxylgruppen enthaltenden Polyestern eines Molgewichtes zwischen 500 und 2 000 mit niedermolekularen Di- bzw. Triisocyanaten.

4. Neue (Meth)acrylsäureester, herstellbar nach dem Verfahren der Ansprüche 1 bis 3 mit der allgemeinen Formel

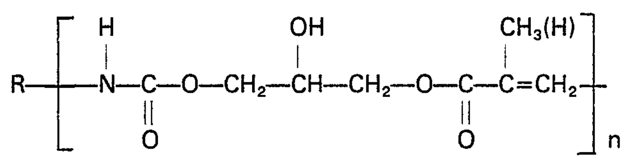

wobei R ein sich von einem organischen Di- oder Triisocyanat gemäß Ansprüchen 1 bis 3 sich ableitender Rest ist und n 2 oder 3 ist.

5. Neue (Meth)acrylsäureester nach Anspruch 4, wobei R ein alkylaromatischer Kohlenwasserstoffrest mit 7 bis 19 Kohlenstoffatomen ist.

6. Anaerob erhärtende Klebe- und Dichtmasse, die als wesentlichen Bestandteil Verbindungen nach den Ansprüchen 4 und 5 enthält.

7. Anaerob erhärtende Klebe- und Dichtmasse, die 20 bis 80 Gewichtsprozent der Verbindungen nach den Ansprüche 4 und 5 sowie 80 bis 20 Gewichtsprozent weitere (Meth)acrylsäure(ester) als polymerisierbare Komponenten enthält.

**Revendications**

1. Procédé de préparation de composés comportant des groupes uréthane, ainsi que des groupements terminaux d'esters (méth)acryliques, caractérisé en ce qu'on fait réagir des composés dont la molécule

contient plus d'un groupement isocyanate et dont le poids moléculaire ne dépasse pas 2.500, avec du 2,3-époxypropanol-1 (glycide) dans un rapport calculé de telle sorte qu'au lieu de tous les groupements isocyanate, on ait des groupes époxy et l'on fait ensuite réagir ces derniers avec la quantité équivalente d'acide méthacrylique et/ou d'acide acrylique.

2. Procédé de préparation de composés selon la revendication 1, caractérisé en ce qu'on choisit les composés dont la molécule contient plus d'un groupement isocyanate parmi un groupe ne dépassant pas un poids moléculaire de 700, notamment: le toluylène-diisocyanate, le toluylène-diisocyanate dimérisé, le diphénylméthane-diisocyanate, le naphtylène-diisocyanate, l'hexaméthylène-diisocyanate, l'isophorone-diisocyanate, le triméthylhexaméthylène-diisocyanate, le triphétnylméthane-diisocyanate, le dianisidine-diisocyanate, le thiophosphate de tris-(4-isocyanatophényle), de même que le produit d'addition de 3 moles de toluylène-diisocyanate à du triméthylpropane.

3. Procédé de préparation de composés selon la revendication 1, caractérisé en ce qu'on choisit les composés dont la molécule contient plus d'un groupement isocyanate parmi les produits réactionnels de polyesters contenant des groupes hydroxyle terminaux et ayant un poids moléculaire se situant entre 500 et 2.000, avec des di- ou des triisocyanates de faible poids moléculare.

4. Nouveaux esters d'acides (méth)acryliques, que l'on peut préparer selon le procédé des revendications 1 à 3 et répondant à la formule générale:

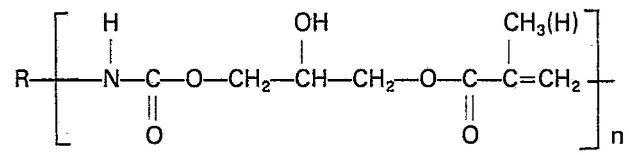

dans laquelle R représente un radical dérivant d'un di- ou d'un triisocyanate organique selon les revendications 1 à 3, tandis que n est égal à 2 ou 3.

5. Nouveaux esters d'acides (méth)acryliques selon la revendication 4, R représentant un radical d'hydrocarbure alkyl-aromatique contenant 7 à 19 atomes de carbone.

6. Masse adhésive et d'étanchéité durcissant dans des conditions anaérobies et contenant, comme constituant essentiel, des composés selon les revendications 4 et 5.

7. Masse adhésives et d'étanchéité durcissant dans des conditions anaérobies contenant 20 à 80% en poids des composés selon les revendications 4 et 5, ainsi que 80 à 20% en poids d'autres esters d'acides (méth)acryliques comme composants polymérisables.

**Claims**

1. A process for the production of compounds containing urethane groups and terminal (meth)acrylate groups, characterized in that compounds which contain more than one isocyanate group in the molecule and of which the molecular weight does not exceed 2500 are reacted with 2,3-epoxy-1-propanol (glycidol) in such a ratio that epoxy groups replaced all the isocyanate groups and are subsequently reacted with the equivalent quantity of methacrylic acid and/or acrylic acid.

2. A process as claimed in Claim 1, characterized in that the compounds containing more thane one isocyanate group in the molecule are selected from a group not exceeding a molecular weight of 700, namely: tolylene diisocyanate, dimerized tolylene diisocyanate, diphenylmethane diisocyanate, naphthylene diisocyanate, hexamethylene diisocyanate, isophorone diisocyanate, trimethyl hexamethylene diisocyanate, triphenylmethane diisocyanate, dianisidine diisocyanate, tris-(4-isocyanatophenyl)-thiophosphate and the adduct of 3 moles of tolylene diisocyanate with trimethyl propane.

3. A process as claimed in Claim 1, characterized in that the compounds containing more than one isocyanate group in the molecule are selected from the reaction products of hydroxyl-terminated polyesters having a molecular weight of from 500 to 2000 with low molecular weight di- or triisocyanates.

4. New (meth)acrylates corresponding to the following general formula

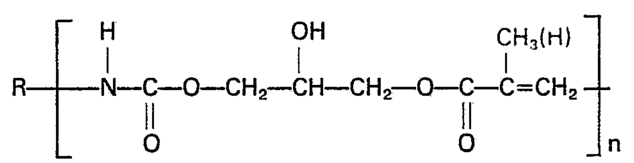

in which R is a radical derived from an organic di- or triisocyanate according to Claims 1 to 3 and n=2 or 3, obtainable by the process claimed in Claims 1 to 3.

5. New (meth)acrylates as claimed in Claim 4, in which R is an alkylaromatic hydrocarbon radical containing 7 to 19 carbon atoms.

6. An anaerobic adhesive and sealing compound containing compounds of the type claimed in Claims 4 and 5 as its essential constituent.

7. An anaerobic adhesive and sealing compound containing from 20 to 80% by weight of the compounds claimed in Claims 4 and 5 and from 80 to 20% by weight of other (meth)acrylic acid (esters) as polymerizable components.